# EUROPEAN PATENT SPECIFICATION

(11) **EP 2 821 658 B1**
(45) Date of publication and mention of the grant of the patent: **17.08.2016**
(21) Application number: 14174767.5
(22) Date of filing: 27.06.2014
(51) Int. Cl.: F16C 19/36, F16H 57/022

(54) **Gearbox**
Getriebe
Boîte de vitesse

(30) Priority: 04.07.2013 IT MO20130195
(43) Date of publication of application: 07.01.2015
(73) Proprietor: Comer Industries S.p.A., 20123 Milano (IT)
(72) Inventor: Brunazzi, Achille, 42044 GUALTIERI, Fraz. SANTA VITTORIA RE (IT); Tenca, Gianni, 46019 VIADANA MN (IT); Fontana, Paolo, 42027 MONTECCHIO EMILIA RE (IT); Negrelli, Matteo, 41012 CARPI MO (IT)
(74) Representative: Modiano, Micaela Nadia

(56) References cited:
- WO-A1-2005/121604
- WO-A1-2007/115076
- WO-A1-2007/133131

## Description

The present invention relates to a gearbox.

A gearbox, or transmission box, is a box that contains internally all the transmission elements required to transfer or convert a torque and a rotation from one or more inputs to one or more outputs. The transmission elements usually comprise rotation shafts, which pass through the transmission box and are coupled rotatably to it by way of bearings of various kinds. Gears of various kinds are furthermore associated with said rotation shafts and the torque and rotation are transferred by means of said gears from the input to the output of the transmission box.

By means of the bearings, the loads that act on the transmission elements are transferred to the transmission box. Such loads arise from various contributions and in particular from the external forces that act on the shaft, or arise from the loads generated by the gears or from reactions that are internal to said bearings. This last case is typical of angular contact bearings (of the tapered roller or spherical type). For this type of bearing the working angle of the rolling bodies in fact produces axial thrusts even in the presence of merely radial external stresses.

Such known types of gearbox are not devoid of drawbacks, which include the fact that their external structure is strongly subject to structural tensions and deformations in the presence of the intense loads induced by the active internal rotating components, and often tends to fail structurally.

Another drawback of such known types of gearbox is that especially in the case of large boxes, with very wide walls, i.e., in which the thickness/width ratio is very low, the axial loads are the most critical type of stress, since they can cause large deformations due to the limited stiffness offered by the wall in an axial direction, i.e., at right angles to its surface extension.

Another drawback of such gearboxes of the known type resides in that they require solutions for reinforcing the external structure, such as ribs or increased cross-sections, which entail an increase in the space occupations and weights of the box and in any case have limits to the degree of stiffness that can be given to said box.

Moreover, in the field of motion transmission it is known that preloading angular contact bearings is a practice aimed at limiting the play of the rolling bodies in the operating conditions and at extending the life of the bearings. Preloading is obtained usually by shimming or by using threaded rings that are screwed onto the rotation shafts and move the bearings into abutment against specifically machined locators in seats obtained on the gearbox proper. Such mechanisms for preloading the bearings, however, do not allow precise, quick and convenient adjustment of the preloading of the bearings.

WO 2007/133131 A1 discloses a gear transmission with first and second parallel shafts, a transmission housing with first and second walls extending perpendicular to the shafts, and a plurality of gearwheels fixed to the shafts. The shafts are suspended by bearings in the walls which are interconnected by at least one rod for reducing deflections of the walls in operation.

The aim of the present invention is to provide a gearbox that solves the technical problem described above, obviates the drawbacks and overcomes the limitations of the background art, by being structurally rigid and not subject to unwanted failures and/or deformations.

Within this aim, an object of the present invention is to provide a gearbox that allows to adjust accurately, precisely, rapidly and also comfortably the preloading of the rotation bearings of the shafts.

Another object of the invention is to provide a gearbox that is capable of giving the greatest assurances of reliability and safety in use.

Another object of the invention is to provide a gearbox that is easy to provide and economically competitive if compared with the background art.

In accordance with the invention, there is provided a gearbox as defined in the appended claims.

Further characteristics and advantages will become better apparent from the description of a preferred but not exclusive embodiment of a gearbox, illustrated by way of non-limiting example with the aid of the accompanying drawings, wherein:

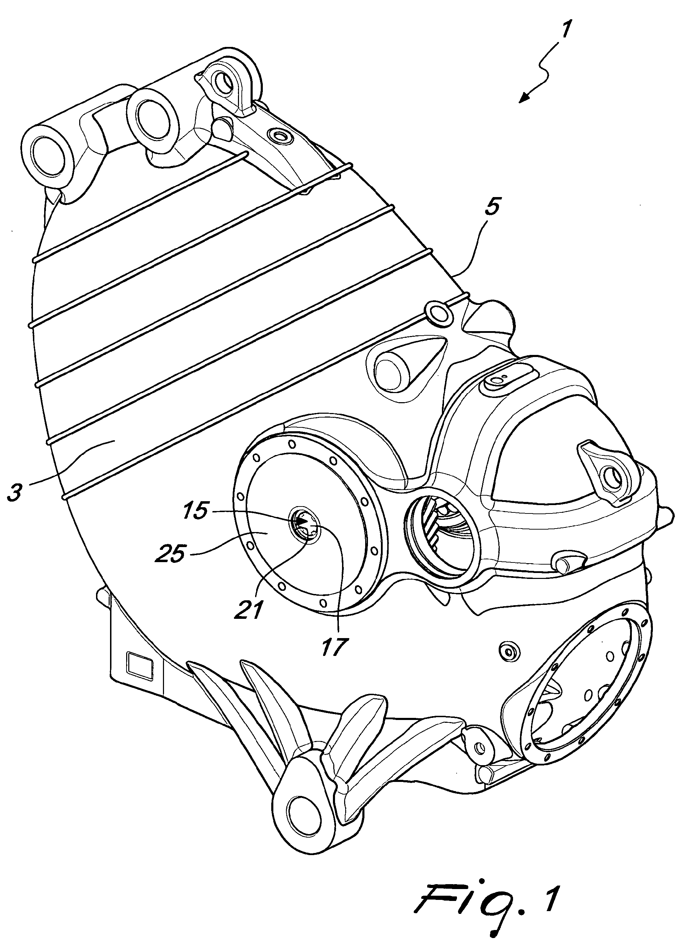

Figure 1 is a perspective view of an embodiment of a gearbox according to the invention;

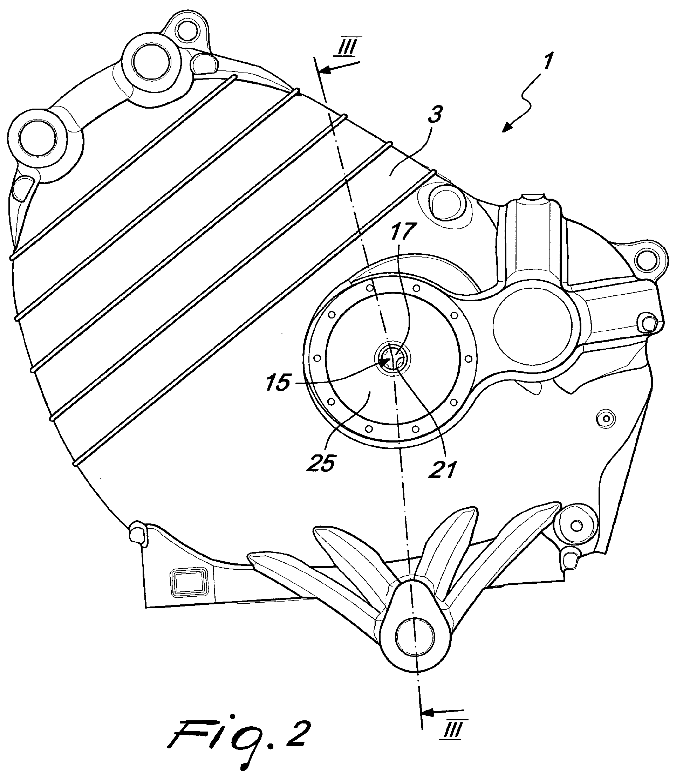

Figure 2 is a side view of the gearbox of Figure 1;

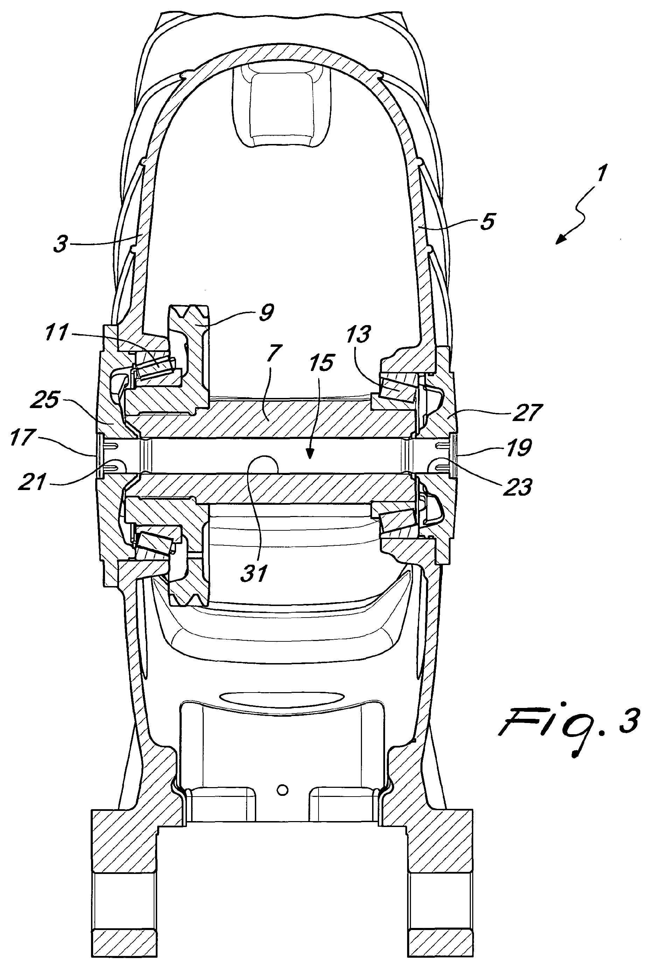

Figure 3 is a sectional view of the gearbox shown in Figure 2, taken along the plane III-III;

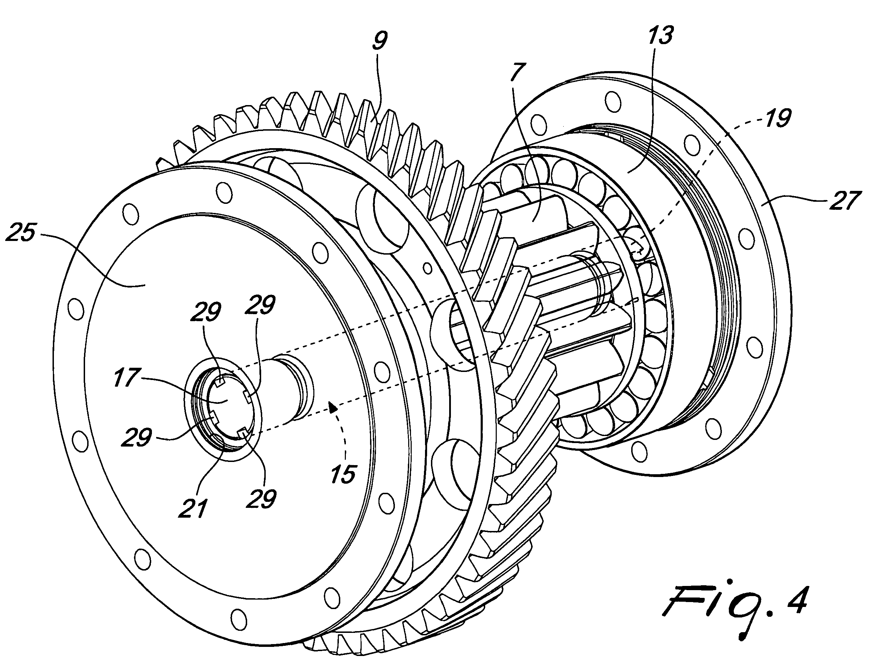

Figure 4 is a perspective view of some components of the gearbox of Figure 1, showing in particular a shaft that supports a gear;

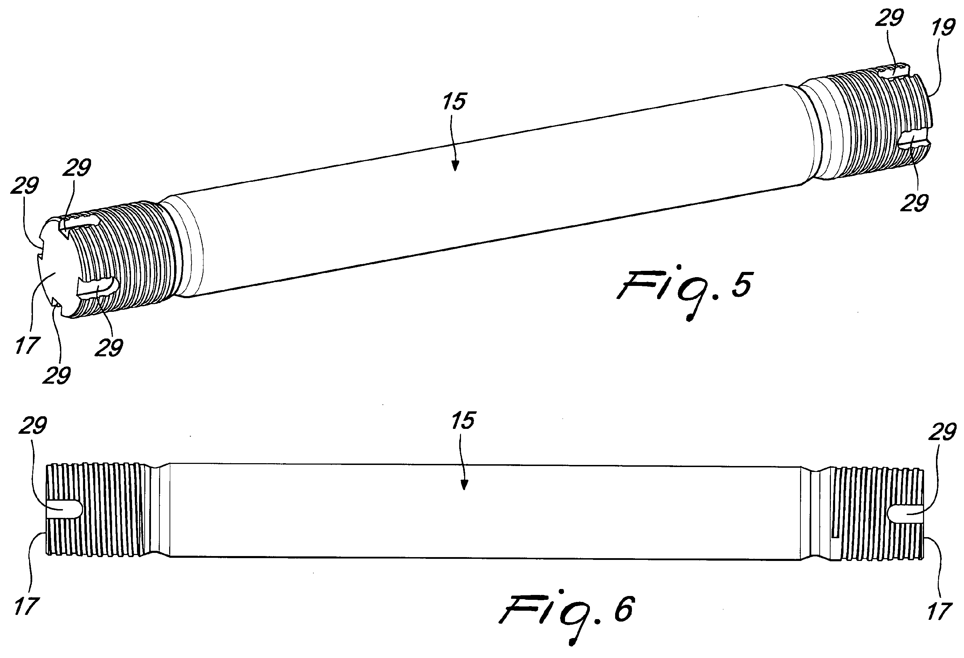

Figure 5 is a perspective view of a component of the gearbox of Figure 1, showing in particular a tension member;
Figure 6 is a side view of the tension member shown in Figure 5.

With reference to the figures, the gearbox, generally designated by the reference numeral 1, comprises two mutually opposite walls 3 and 5 and comprises at least one shaft 7 that supports at least one gear 9. The shaft 7 passes through the gearbox 1 from one of the two mutually opposite walls 3 and 5 to the other. Each one of the ends of the shaft 7 is coupled rotatably to a respective wall 3 or 5 by means of a respective bearing 11 or 13.

According to the invention, the gearbox 1 comprises at least one rigid tension member 15, which is internal to the gearbox 1 and acts between the two mutually opposite walls 3 and 5 to perform their traction.

The tension member 15 can be coupled directly to the walls 3 and 5 of the gearbox 1.

In particular, the tension member 15 comprises advantageously a substantially cylindrical body provided with two threaded ends 17 and 19, which are adapted to engage in two respective threaded holes 21 and 23, each provided in one of the two walls 3 and 5.

Advantageously, each one of the two walls 3, 5 comprises an opening that can be closed by a respective cover 25 and 27. The two threaded holes 21 and 23 are each provided in a respective cover 25 or 27. The covers 25 and 27 can be fixed to the respective wall 3 or 5 of the gearbox 1 by way of various fixing means, such as for example screws.

The two threaded ends 17 and 19 of the tension member 15 advantageously have threads with opposite orientations. In particular, the two ends 17 and 19 can have threads with a respectively left-handed and right-handed helical path or vice versa.

Moreover, at least one of the two threaded ends 17 or 19 comprises means adapted for the rotation of the tension member 15 with respect to its own longitudinal axis. Such means adapted for the rotation of the tension member 15 can comprise a plurality of recesses 29 provided in at least one of the two ends 17 or 19. The tension member 15 can thus be rotated with respect to its own longitudinal axis, acting, by means of adapted tools of a known type, by action on the recesses 29 provided in at least one of the two ends 17 or 19 of said tension member 15 or, preferably, provided in both ends 17 and 19.

Moreover, the shaft 7 of the gearbox 1 can comprise a longitudinal through hole 31, i.e., a hole provided along the longitudinal axis of rotation of said shaft 7, within which the tension member 15 is accommodated.

The bearings 11 and 13 can be of the type of angular contact bearings, i.e., of the type of tapered roller bearings or of the type of angled spherical bearings; in this manner, the mutual traction between the two walls 3 and 5 by the action of the tension member 15 is capable of preloading said bearings 11 and 13.

In particular, the action of the gear 9, with helical teeth, combined with the adoption of bearings 11 and 13 of the angular contact bearing type, generates, at the seats of the bearings 11 and 13, reactions in an axial direction, i.e., in a longitudinal direction, which are transmitted to the walls 3 and 5 of the gearbox 1. The tension member 15 is adapted, in the presence of the intense axial thrusts generated inside the gearbox 1, to contrast the deformation of the walls 3 and 5, keeping them in mutual traction and contributing to reducing the state of stress of said gearbox 1.

The rotation of the tension member 15 with respect to its own longitudinal axis, thanks to the presence of the two threaded ends 17 and 19, with oppositely oriented threads, allows to introduce and adjust the preloading on the gearbox 1 and thus on the bearings 11 and 13. In fact, the rotation of the tension member 15 in one direction tends to move mutually closer the walls 3 and 5, or the covers 25 and 27, by way of the traction on the threaded holes 21 and 23, inducing a compression load along the longitudinal axis of the tension member 15. This also entails an increase in the extent of the preloading that acts on the angular contact bearings 11 and 13.

Conversely, a rotation of the tension member 15 in the opposite direction tends to move mutually apart the walls 3 and 5, or the covers 25 and 27, by pushing on the threaded holes 21 and 23, inducing a traction load along the longitudinal axis of the tension member 15 and causing a reduction of the extent of the preloading that acts on the angular contact bearings 11 and 13.

In practice it has been found that the gearbox according to the present invention achieves the intended aim and objects, since it allows to introduce a connection between the mutually opposite walls of said box, preventing its failure, or its excessive deformation, especially in the presence of high loads in an axial direction.

Another advantage of the gearbox according to the invention resides in that it reduces the tensions and deformations of said box, causing a stiffening of the overall system. In particular, the cylindrical tension member is more effective than other reinforcement solutions, such as the presence of external ribs or larger cross-sections of the box, since it is far more rigid thanks to the direct transmission of forces. It is in fact known that an axially stressed cylindrical member is far more rigid than a flexurally stressed member, especially if the latter has a very low thickness/surface ratio, as in the case of the walls that delimit a gearbox of the known type.

Another advantage of the gearbox according to the invention resides in that it allows fine adjustment of the preloading of the rotation bearings of the shaft, reducing the risk of preloading loss and thus extending the life of said bearings. Moreover, this adjustment of the preloading of the bearings can be performed comfortably and quickly, simply by rotating the tension member.

Another advantage of the gearbox according to the invention resides in that a single element, i.e., the tension member, performs the dual function of structural reinforcement of the box and of adjustment of the preloading of the bearings.

Moreover, the fact that the tension member can be accommodated axially within the shaft allows to connect structurally the two mutually opposite walls of the box, which support said shaft, in a position that is approximately barycentric with respect to the region of axial thrust of the loads produced by the angular contact bearings, thus optimizing the structural reinforcement function and reducing the presence of shearing stresses on said walls of the box.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A gearbox (1), comprising two mutually opposite walls (3, 5) and comprising at least one shaft (7) that supports at least one gear (9), said at least one shaft (7) passing through said gearbox (1) from one of said two mutually opposite walls (3, 5) to the other, each one of the ends of said at least one shaft (7) being coupled rotatably to a respective wall (3, 5) by means of a respective bearing (11, 13), the gearbox (1) further comprising at least one rigid tension member (15), which is internal to said gearbox (1) and acts between said two mutually opposite walls (3, 5) to perform their traction, **characterized in that** said tension member (15) comprises a substantially cylindrical body provided with two threaded ends (17, 19), which are adapted to engage in two respective threaded holes (21, 23), each provided in one of said two walls (3, 5), said two threaded ends (17, 19) having threads with opposite orientations.

2. The gearbox (1) according to claim 1, **characterized in that** each one of said two walls (3, 5) comprises an opening that can be closed by a respective cover (25, 27), said two threaded holes (21, 23) being each provided in one of said two covers (25, 27).

3. The gearbox (1) according to one or more of the preceding claims, **characterized in that** at least one of said two threaded ends (17, 19) comprises means adapted for the rotation of said tension member (15) with respect to its own longitudinal axis.

4. The gearbox (1) according to one or more of the preceding claims, **characterized in that** said means adapted for the rotation of said tension member (15) comprise a plurality of recesses (29) provided in at least one of said two ends (17, 19).

5. The gearbox (1) according to one or more of the preceding claims, **characterized in that** said at least one shaft (7) comprises a longitudinal through hole (31), said tension member (15) being accommodated in said through hole (31).

6. The gearbox (1) according to one or more of the preceding claims, **characterized in that** said bearings (11, 13) are of the type of angular contact bearings, the traction of said two walls (3, 5) by said tension member (15) preloading said bearings (11, 13).

## Patentansprüche

1. Ein Getriebe (1), das zwei einander gegenüberliegende Wände (3, 5) und mindestens eine Welle (7) umfasst, die mindestens ein Zahnrad (9) trägt, wobei die mindestens eine Welle (7) durch das Getriebe (1) von einer der beiden einander gegenüberliegenden Wänden (3, 5) zur anderen verläuft und wobei jedes der Enden der mindestens einen Welle (7) über ein entsprechendes Lager (11, 13) drehbar mit einer entsprechenden Wand (3, 5) gekoppelt ist, wobei das Getriebe (1) weiter mindestens ein starres Tensionsglied (15) umfasst, das innerhalb des Getriebes (1) liegt und zwischen den zwei einander gegenüberliegenden Wänden (3, 5) wirkt, um ihren Kraftschluss durchzuführen, **dadurch gekennzeichnet, dass** das Tensionsglied (15) einen im Wesentlichen zylindrischen Körper umfasst, ausgestattet mit zwei mit einem Gewinde versehenen Enden (17, 19), die ausgebildet sind, um in zwei entsprechende Gewindebohrungen (21, 23) einzugreifen, von denen jede in einer der beiden Wände (3, 5) angebracht ist, wobei die zwei mit einem Gewinde versehenen Enden (17, 19) Gewinde mit entgegengesetzten Ausrichtungen haben.

2. Das Getriebe (1) gemäß Anspruch 1, **dadurch gekennzeichnet, dass** jede der beiden Wände (3, 5) eine Öffnung umfasst, die durch eine entsprechende Abdeckung (25, 27) verschlossen werden kann, wobei die zwei Gewindebohrungen (21, 23) jeweils in einer der beiden Abdeckungen (25, 27) angebracht sind.

3. Das Getriebe (1) gemäß einem oder mehreren der obigen Ansprüche, **dadurch gekennzeichnet, dass** mindestens eines der zwei mit einem Gewinde versehenen Enden (17, 19) Mittel umfasst, die zur Drehung des Tensionsglieds (15) um seine eigene Längsachse ausgebildet sind.

4. Das Getriebe (1) gemäß einem oder mehreren der obigen Ansprüche, **dadurch gekennzeichnet, dass** die Mittel, die zur Drehung des Tensionsgliedes (15) ausgebildet sind, eine Vielzahl von Vertiefungen (29) in mindestens einem der beiden Enden (17, 19) umfassen.

5. Das Getriebe (1) gemäß einem oder mehreren der obigen Ansprüche, **dadurch gekennzeichnet, dass** die mindestens eine Welle (7) eine längliche Durchgangsbohrung (31) umfasst, wobei das Tensionsglied (15) in der Durchgangsbohrung (31) untergebracht ist.

6. Das Getriebe (1) gemäß einem oder mehreren der obigen Ansprüche, **dadurch gekennzeichnet, dass** die Lager (11, 13) vom Schräglagertyp sind, wobei der Kraftschluss an den beiden Wänden (3, 5) durch das Tensionsglied (15) die Lager (11, 13) vorspannt.

## Revendications

1. Boîte de vitesse (1), comprenant deux parois mutuellement opposées (3, 5) et comprenant au moins un arbre (7) qui supporte au moins une roue d'engrenage (9), ledit au moins un arbre (7) passant à travers ladite boîte de vitesse (1) de l'une desdites deux parois mutuellement opposées (3, 5) à l'autre, chacune des extrémités dudit au moins un arbre (7) étant accouplée de façon rotative à une paroi respective (3, 5) au moyen d'un palier respectif (11, 13), la boîte de vitesse (1) comprenant en outre au moins un organe de tension rigide (15), qui est interne à ladite boîte de vitesse (1) et agit entre lesdites deux parois mutuellement opposées (3, 5) pour réaliser leur traction, **caractérisée en ce que** ledit organe de tension (15) comprend un corps sensiblement cylindrique pourvu de deux extrémités filetées (17, 19), qui sont adaptées pour s'engager dans deux trous filetés respectifs (21, 23), chacun prévu dans l'une desdites deux parois (3, 5), lesdites deux extrémités filetées (17, 19) possédant des filets avec des orientations opposées.

2. Boîte de vitesse (1) selon la revendication 1, **caractérisée en ce que** chacune desdites deux parois (3, 5) comprend une ouverture qui peut être fermée par un couvercle respectif (25, 27), lesdits deux trous filetés (21, 23) étant chacun prévus dans l'un desdits deux couvercles (25, 27).

3. Boîte de vitesse (1) selon l'une ou plusieurs des revendications précédentes, **caractérisée en ce qu'**au moins l'une desdites deux extrémités filetées (17, 19) comprend des moyens adaptés pour la rotation dudit organe de tension (15) par rapport à son propre axe longitudinal.

4. Boîte de vitesse (1) selon l'une ou plusieurs des revendications précédentes, **caractérisée en ce que** lesdits moyens adaptés pour la rotation dudit organe de tension (15) comprennent une pluralité d'évidements (29) prévus dans au moins l'une desdites deux extrémités (17, 19).

5. Boîte de vitesse (1) selon l'une ou plusieurs des revendications précédentes, **caractérisée en ce que** ledit au moins un arbre (7) comprend un trou débouchant longitudinal (31), ledit organe de tension (15) étant logé dans ledit trou débouchant (31).

6. Boîte de vitesse (1) selon l'une ou plusieurs des revendications précédentes, **caractérisée en ce que** lesdits paliers (11, 13) sont du type de paliers à contact angulaire, la traction desdites deux parois (3, 5) par ledit organe de tension (15) pré-chargeant lesdits paliers (11, 13).
